# EUROPEAN PATENT APPLICATION

(11) **EP 3 065 373 A1**
(43) Date of publication of application: **07.09.2016**
(21) Application number: 16158209.3
(22) Date of filing: 02.03.2016
(51) Int. Cl.: H04L 29/06, H04L 29/08, H04L 12/18

(54) **COMMUNICATION SYSTEM, COMMUNICATION METHOD, RELAY DEVICE, AND COMPUTER PROGRAM PRODUCT**

(30) Priority: 03.03.2015 JP 2015041425
(71) Applicant: Ricoh Company, Ltd., Tokyo 143-8555 (JP)
(72) Inventor: SHIRO, Hideki, Tokyo, 143-8555 (JP); IMAI, Takuya, Tokyo, 143-8555 (JP); MORITA, Kenichiro, Tokyo, 143-8555 (JP); NAGAMINE, Shoh, Tokyo, 143-8555 (JP)
(74) Representative: Schwabe - Sandmair - Marx

(57) **Abstract**

In a communication system, a plurality of communication terminals including first communication terminals and second communication terminals are connected through a network. The communication system includes: a communicator that transmits and receives content data; an executor that controls, when first communication is established between communication terminals, the communicator to transmit and receive content data to and from a first communication terminal and not to transmit content data to a second communication terminal but to receive content data from the second communication terminal, in a predetermined transmission band; and a receiver that receives selection of a second communication terminal with which second communication is to be established. When the second communication is established with the second communication terminal selection of which is received, the executor controls the communicator to transmit and receive content data to and from the second communication terminal selection of which is received.

## Description

### CROSS-REFERENCE TO RELATED APPLICATIONS

The present application claims priority to and incorporates by reference the entire contents of Japanese Patent Application No. 2015-041425 filed in Japan on March 3, 2015.

### BACKGROUND OF THE INVENTION

### 1. Field of the Invention

The present invention relates to a communication system, a communication method, a relay device, and a computer program product.

### 2. Description of the Related Art

Recently, communication systems for performing, for example, a call through a communication network such as the Internet and a leased circuit have become widespread as demands for reduced cost and time of transportation of participants increase, for example.

Such a communication system is applicable to various one-directional and bidirectional communication services. For example, a reception system has been disclosed that a communication terminal such as a telephone or a videophone to be used by a visitor (guest) is installed at a reception, and a reception guide (operator) waiting at a remote site guides the guest by transmitting, for example, voice and video (image) through the communication terminal. However, when a large number of operators and guests are involved in such a reception system, only a one-to-one communication (talk) is possible and a many-to-many communication is impossible. The "many-to-many communication" is, for example, a communication between a plurality of operators, or a one-directional communication (broadcast) from an operator to a plurality of guests.

For example, the communication system described above is used in a disclosed at-home diagnosis system to provide at-home diagnosis service by a doctor in a similar environment to that at hospital (refer to WO2004/092991, for example). The at-home diagnosis system according to WO2004/092991 allows a patient to receive at-home diagnosis service through connection with the terminal of a doctor at a remote site using a videophone. This at-home diagnosis system connects a patient terminal from which a diagnosis request is received to a virtual waiting room, enabling a talk by videophone between patient terminals connected to the virtual waiting room.

In such a communication system as the at-home diagnosis system described above, however, a wide transmission band is required to achieve a communication between terminals.

There is a need to provide a communication system, a communication method, a relay device, and a computer program product that enable a many-to-many communication as well as a one-to-one communication in communication between terminals and achieve a reduced transmission band.

### SUMMARY OF THE INVENTION

It is an object of the present invention to at least partially solve the problems in the conventional technology.

In a communication system, a plurality of communication terminals including first communication terminals and second communication terminals are connected through a network. The communication system includes: a communicator that transmits and receives content data; an executor that controls, when first communication is established between communication terminals, the communicator to transmit and receive content data to and from a first communication terminal and not to transmit content data to a second communication terminal but to receive content data from the second communication terminal, in a predetermined transmission band; and a receiver that receives selection of a second communication terminal with which second communication is to be established, from at least one second communication terminal with which the first communication is established. When the second communication is established with the second communication terminal selection of which is received, the executor controls the communicator to transmit and receive content data to and from the second communication terminal selection of which is received.

A communication method is to be executed in a communication system in which a plurality of communication terminals including first communication terminals and second communication terminals are connected through a network. The method includes: transmitting and receiving content data; executing, when first communication is established between communication terminals, control to transmit and receive content data to and from a first communication terminal and not to transmit content data to a second communication terminal but to receive content data from the second communication terminal, in a predetermined transmission band; and receiving selection of a second communication terminal with which second communication is to be established, from at least one second communication terminal with which the first communication is established. When the second communication is established with the second communication terminal selection of which is received, performing, at the executing, control to transmit and receive the content data to and from the second communication terminal selection of which is received.

A computer program product includes a non-transitory computer-readable medium containing an information processing program. The program causes a computer connected with a plurality of communication terminals including first communication terminals and second communication terminals through a network, to function as: a communicator that transmits and receives content data; an executor that controls, when first communication is established between communication terminals, the communicator to transmit and receive content data to and from a first communication terminal and not to transmit content data to a second communication terminal but to receive content data from the second communication terminal, in a predetermined transmission band; and a receiver that receives selection of a second communication terminal with which second communication is to be established, from at least one second communication terminal with which the first communication is established. When the second communication is established with the second communication terminal selection of which is received, the executor controls the communicator to transmit and receive content data to and from the second communication terminal selection of which is received.

A relay device is connected with a plurality of communication terminals including first communication terminals and second communication terminals through a network. The relay device includes: a communicator that relays communication of content data between the plurality of communication terminals; and a transfer manager that, when first communication is established between communication terminals, allows communication of content data between first communication terminals, and does not allow transmission of content data from the first communication terminals to a second communication terminal but allows transmission of content data from the second communication terminal to the first communication terminals. The transfer manager allows, when second communication is established between a first communication terminal and a second communication terminal selection of which is received by the first communication terminal, communication of content data between the first communication terminal and the second communication terminal selection of which is received.

A computer program product includes a non-transitory computer-readable medium containing an information processing program. The program causes a computer connected with a plurality of communication terminals including first communication terminals and second communication terminals through a network, to function as: a communicator that relays communication of content data between the plurality of communication terminals; and a transfer manager that, when first communication is established between communication terminals, allows communication of content data between first communication terminals, and does not allow transmission of content data from the first communication terminals to a second communication terminal but allows transmission of content data from the second communication terminal to the first communication terminals. The transfer manager allows, when second communication is established between a first communication terminal and a second communication terminal selection of which is received by the first communication terminal, communication of content data between the first communication terminal and the second communication terminal selection of which is received.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram of a communication system according to an embodiment of the present invention;
FIG. 2 is a hardware configuration diagram of a communication terminal according to the embodiment;
FIG. 3 is a hardware configuration diagram of a relay device according to the embodiment;
FIG. 4 is a functional block diagram of the communication terminal, a management device, and the relay device according to the embodiment;
FIG. 5 illustrates an exemplary transmission management table;
FIG. 6A illustrates an exemplary authentication management table;
FIG. 6B illustrates an exemplary terminal management table;
FIG. 7 illustrates an exemplary transfer management table;
FIG. 8A is a state transition diagram illustrating transition of the state of an operator terminal;
FIG. 8B is a state transition diagram illustrating transition of the state of a guest terminal;
FIG. 9 is a schematic diagram of a virtual waiting room when no operator performs a broadcast;
FIG. 10A is a pattern diagram illustrating an exemplary screen displayed on an operator terminal in the case of FIG. 9;
FIG. 10B is a pattern diagram illustrating an exemplary screen displayed on a guest terminal in the case of FIG. 9;
FIG. 11 is a schematic diagram of the virtual waiting room when an operator 01 is performing a broadcast;
FIG. 12 is a pattern diagram illustrating an exemplary screen displayed on a guest terminal in the case of FIG. 11;
FIG. 13 is a sequence diagram illustrating the process of authentication of the communication terminal according to the embodiment;
FIG. 14 is a sequence diagram illustrating the process of participation in a session sed1 by an operator terminal according to the embodiment;
FIG. 15 is a sequence diagram illustrating the process of participation in the session sed1 by a guest terminal according to the embodiment;
FIG. 16 is a sequence diagram illustrating the process of a talk and a broadcast between operator terminals according to the embodiment;
FIG. 17 is a sequence diagram illustrating the process of participation in a session sed2 by an operator terminal and a guest terminal according to the embodiment; and
FIG. 18 is a sequence diagram illustrating the process of exit of an operator terminal and a guest terminal according to the embodiment from the session sed2.

### DETAILED DESCRIPTION OF THE PREFERRED EMBODIMENTS

Exemplary embodiments of a communication system, a communication method, a relay device, and a computer program product are described in detail below with reference to the accompanied drawings. A communication system according to the present embodiment provides a virtual waiting room for typical face-to-face reception. Entrance to this virtual waiting room is performed by establishing first communication (session sed1 to be described later) between communication terminals operated by a plurality of operators (reception guides) and a plurality of guests (visitors). The present embodiment provides a many-to-many communication between communication terminals having entered the virtual waiting room. This "many-to-many communication" means, for example, a communication between a plurality of operators and a one-directional communication (broadcast) from an operator to all guests.

Specifically, the communication system in the present embodiment performs control to transmit and receive video and sound only between the communication terminals operated by the operators in the virtual waiting room. Having received a predetermined operation by an operator, the communication system in the present embodiment performs control to temporarily transmit video and sound from a communication terminal operated by the operator to communication terminals operated by all guests. In the following, "broadcast" refers to a function to temporarily transmit video and sound from a communication terminal operated by an operator to communication terminals operated by all guests having entered the virtual waiting room as described above. In the following, a terminal operated by an operator is referred to as an operator terminal, and a terminal operated by a guest is referred to as a guest terminal, in some cases.

The virtual waiting room is a temporary session before establishing second communication (session sed2 to be described later) to start a one-to-one communication between an operator and a guest. Thus, no high-quality video and sound are required in the session. A many-to-many communication requires a large amount of data to be transmitted and received in the entire communication. For this reason, control to reduce the quality of video and sound is performed in the virtual waiting room so as to save a transmission band.

### Entire Configuration of Communication System

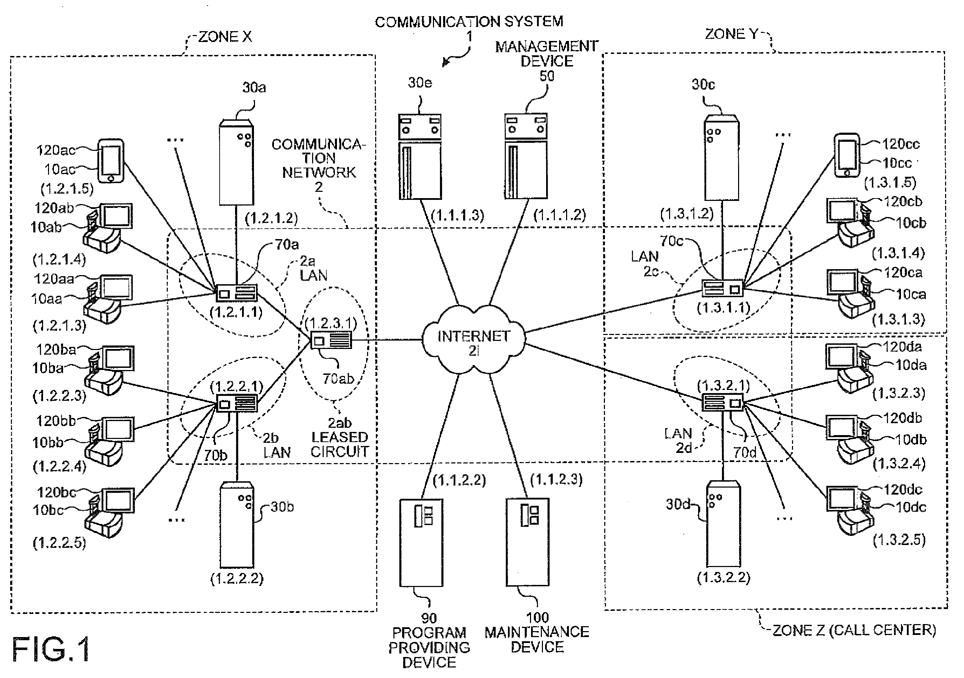

FIG. 1 is a schematic diagram of the communication system according to the embodiment. As illustrated in FIG. 1, this communication system 1 includes a plurality of communication terminals (10aa, 10ab, ...) including respective displays (120aa, 120ab, ...), a plurality of relay devices (30a, 30b, 30c, 30d, and 30e), a management device 50, a program providing device 90, and a maintenance device 100. The communication system 1 enables communication of image and sound data as exemplary phone call data, thereby achieving a reception system between remote sites, for example. A plurality of routers (70a, 70b, 70c, 70d, and 70ab) select an optimum path for content data.

The communication terminals (10aa, 10ab, 10ac, ...), the relay device 30a, and the router 70a are connected by a LAN 2a to enable communication therebetween. The communication terminals (10ba, 10bb, 10bc, ...), the relay device 30b, and the router 70b are connected by a LAN 2b to enable communication therebetween. The LAN 2a and the LAN 2b are connected by a leased circuit 2ab including the router 70ab to enable communication therebetween. The LAN 2a, the LAN 2b, and the leased circuit 2ab are established in a predetermined zone X. Each device does not necessarily need to be connected through a leased circuit, but may be directly connected to the Internet 2i, for example.

The communication terminals (10ca, 10cb, 10cc, ...), the relay device 30c, and the router 70c are connected by a LAN 2c to enable communication therebetween. The LAN 2c is established in a predetermined zone Y. The communication terminals (10da, 10db, 10dc, ...), the relay device 30d, and the router 70d are connected by a LAN 2d to enable communication therebetween. The LAN 2d is established in a predetermined zone Z.

The zones X, Y, and Z are connected by the Internet 2i through the respective routers (70ab, 70c, and 70d) to enable communication therebetween. A call center is provided in the zone Z, and the communication terminals (10da, 10db, 10dc, ...) are communication terminals (operator terminals) operated by operators.

The communication terminals (10aa, 10ab, 10ac, ...), the communication terminals (10ba, 10bb, 10bc, ...), and the communication terminals (10ca, 10cb, 10cc, ...) are communication terminals (guest terminals) operated by guests. These communication terminals 10 can receive guidance service through connection to the communication terminals (10da, 10db, 10dc, ...) in the call center.

In the following, a "communication terminal" may be simply referred to as a "terminal". An arbitrary terminal in the terminals (10aa, 10ab, ...) is referred to as the "terminal 10", and an arbitrary display in the displays (120aa, 120ab, ...) is referred to as the "display 120". An arbitrary relay device in the relay devices (30a, 30b, 30c, 30d, and 30e) is referred to as the "relay device 30". An arbitrary router in the routers (70a, 70b, 70c, 70d, and 70ab) is referred to as the "router 70".

The management device 50, the program providing device 90, and the maintenance device 100 are connected to the Internet 2i. The management device 50, the program providing device 90, and the maintenance device 100 may be installed in the zones (X, Y, and Z) or in a zone other than these zones.

The LAN 2a, the LAN 2b, the leased circuit 2ab, the Internet 2i, the LAN 2c, and the LAN 2d constitute a communication network 2 according to the present embodiment. The communication network 2 may include a region in which wireless communication is performed by, for example, Wireless Fidelity (WiFi) and Bluetooth (registered trademark) as well as a region in which wired communication is performed.

In FIG. 1, a set of four numbers is attached below each communication terminal 10, each relay device 30, the management device 50, each router 70, the program providing device 90, and the maintenance device 100. This set of numbers represents a typical IP address of IPv4 in a simplified manner. For example, the communication terminal 10aa has an IP address of "1.2.1.3". Alternatively, IPv6 may be used in place of IPv4, through the following description is made with IPv4 for simplification.

Each communication terminal 10 illustrated in FIG. 1 achieves a phone call between users by transmitting and receiving content data including sound data or image data. The communication terminal 10 transmits and receives content data by a predetermined communication method (a call control method for connection to or disconnection from the destination of a phone call and a coding method to convert phone call data into IP packets).

Examples of the call control method include (1) Session Initiation Protocol (SIP), (2) H.323, (3) extended SIP protocol, (4) instant messaging protocol, (5) protocol using the MESSAGE method of SIP, (6) Internet Relay Chat (IRC) protocol, and (7) extended instant messaging protocol. Among them, (4) instant messaging protocol is used in, for example, (4-1) Extensible Messaging and Presence Protocol (XMPP) or (4-2) ICQ (registered trademark), AIM (registered trademark), or Skype (registered trademark). Examples of (7) extend instant messaging protocol include Jingle.

The relay device 30 relays communication of content data between a plurality of communication terminals 10. The management device 50 monitors, for example, a transmission state of content data in the communication network 2 in a centralized manner. Examples of this monitoring of the transmission state include authentication of a user having logged in through a communication terminal 10, monitoring of the communication state of content data in the communication terminal 10, storing of an address list of the addresses of the source and destination of content data, and monitoring of the relay state of content data in the relay device 30.

The program providing device 90 includes a hard disk drive (HDD) storing a communication terminal control program that causes a communication terminal 10 to achieve various functions, and a maintenance program for maintenance of the communication terminal 10. The program providing device 90 transmits these programs to the communication terminal 10. The program providing device 90 stores, in the HDD, a relay-device program that causes the relay device 30 to achieve various functions, a terminal management program that causes the management device 50 to achieve various functions, and a computer program that causes the maintenance device 100 to achieve various functions. The program providing device 90 transmits these programs to the relevant devices.

When a fault (defect) has occurred to a communication terminal 10, the maintenance device 100 (log storing device) receives log data (log information) transmitted from the communication terminal 10 by a user and stores the log data in, for example, a HDD. This allows a serviceman to analyze the log data stored in the maintenance device 100 and perform failure diagnosis of the communication terminal 10.

### Hardware Configuration

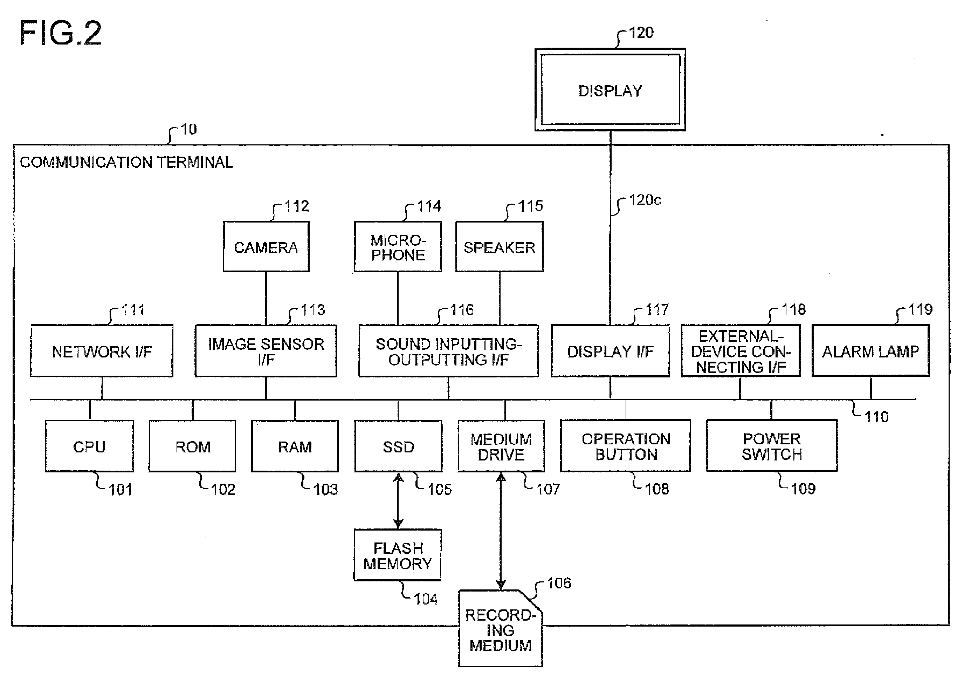

The following describes a hardware configuration in the present embodiment. FIG. 2 is a hardware configuration diagram of a communication terminal according to the embodiment. This communication terminal 10 includes a central processing unit (CPU) 101 that controls the entire operation of the communication terminal 10, a read only memory (ROM) 102 that stores therein a computer program such as an initial program loader (IPL) used to drive the CPU 101, a random access memory (RAM) 103 used as a working area of the CPU 101, a flash memory 104 that stores therein a computer program for the communication terminal 10 and various kinds of data such as image and sound data, a solid state drive (SSD) 105 that controls reading and writing of various kinds of data from and to the flash memory 104 under control of the CPU 101, a medium drive 107 that controls reading and writing (storing) of data from and to a recording medium 106 such as a flash memory or an integrated circuit card (IC card), an operation button 108 operated to, for example, select the address of the communication terminal 10, a power switch 109 for switching the power of the communication terminal 10 on and off, and a network interface (I/F) 111 for data transmission using the communication network 2.

The communication terminal 10 further includes a built-in camera 112 that captures an image of an object to obtain image data under control of the CPU 101, an image sensor I/F 113 that controls drive of the camera 112, a built-in microphone 114 through which sound is input, a built-in speaker 115 that outputs sound, a sound inputting-outputting I/F 116 that processes inputting and outputting of a sound signal between the microphone 114 and the speaker 115 under control of the CPU 101, a display I/F 117 that transmits image data to the external display 120 under control of the CPU 101, an external-device connecting I/F 118 for connecting various external devices, an alarm lamp 119 that notifies any malfunction on the various functions of the communication terminal 10, and a bus line 110 such as an address bus or a data bus for electrically connecting the above-described components as illustrated in FIG. 2.

The display 120 is a display unit that displays, for example, an image of an object and an operation screen, and includes a liquid crystal display or an organic electroluminescence (EL) display. The display 120 is connected with the display I/F 117 through a cable 120c. This cable 120c may be a cable for analog RGB (VGA) signal, a component video cable, or a High-Definition Multimedia Interface (HDMI) (registered trademark) or Digital Video Interactive (DVI) signal cable.

The camera 112 includes a lens, and a solid image sensor that electronically quantizes an image (video) of an object by converting light into electric charge. The solid image sensor may be a complementary metal oxide semiconductor (CMOS) or a charge coupled device (CCD), for example.

The external-device connecting I/F 118 is electrically connectable with external devices such as an external camera, an external microphone, and an external speaker through a Universal Serial Bus (USB) cable plugged in a connection port of a housing. When connected, the external camera is driven under control of the CPU 101 in priority to the built-in the camera 112. Similarly, when connected, the external microphone and the external speaker are driven under control of the CPU 101 in priority to the built-in microphone 114 and the built-in speaker 115, respectively.

The recording medium 106 is detachably mounted on the communication terminal 10. The recording medium 106 is not limited to the flash memory 104, and may be any non-transitory memory that performs reading and writing of data under control of the CPU 101, such as an electrically erasable programmable ROM (EEPROM).

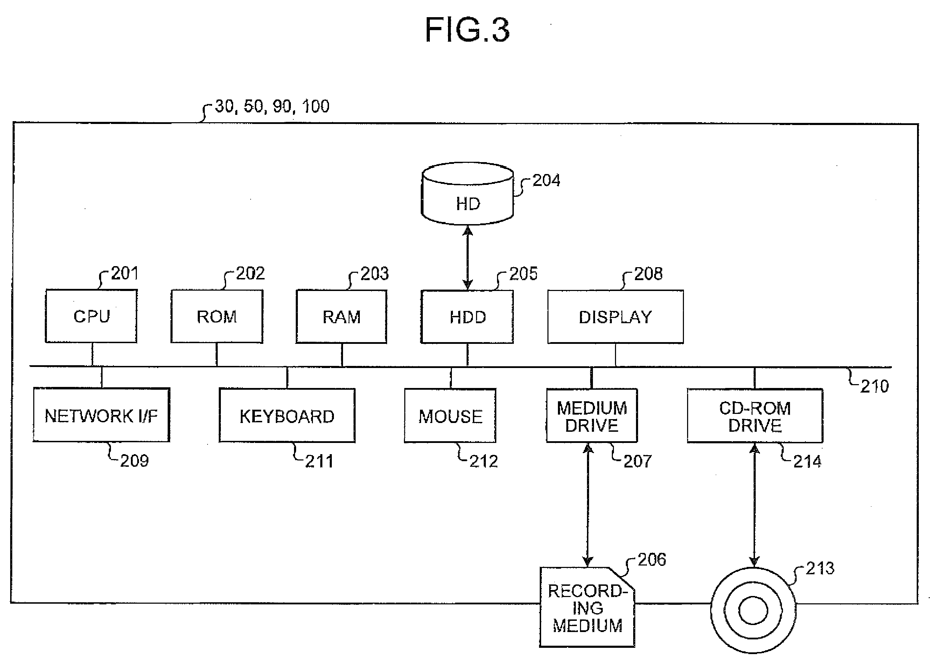

FIG. 3 is a hardware configuration diagram of the relay device according to the embodiment. The relay device 30 includes a CPU 201 that controls the entire operation of the relay device 30, a ROM 202 that stores therein a computer program such as an IPL used to drive the CPU 201, a RAM 203 used as a working area of the CPU 201, a HD 204 that stores various kinds of data such as a computer program for the relay device 30, a HDD 205 that controls reading and writing of various kinds of data from and to the HD 204 under control of the CPU 201, a medium drive 207 that controls reading and writing (storing) of data from and to a recording medium 206 such as a flash memory, a display 208 that displays various kinds of information such as a cursor, a menu, a window, a character, and an image, a network I/F 209 for data communication through the communication network 2, a keyboard 211 including a plurality of keys for inputting of, for example, a character, a numerical value, and various instructions, a mouse 212 for performing, for example, selection and execution of various instructions, selection of a processing target, and movement of a cursor, a compact disc read only memory (CD-ROM) drive 214 that controls reading and writing of various kinds of data from and to a CD-ROM 213 as an exemplary detachable recording medium, and a bus line 210 such as an address bus or a data bus for electrically connecting the above-described components as illustrated in FIG. 3.

The management device 50, the program providing device 90, and the maintenance device 100 have the same hardware configuration that of the relay device 30, and thus description thereof is omitted.

### Functional Configuration

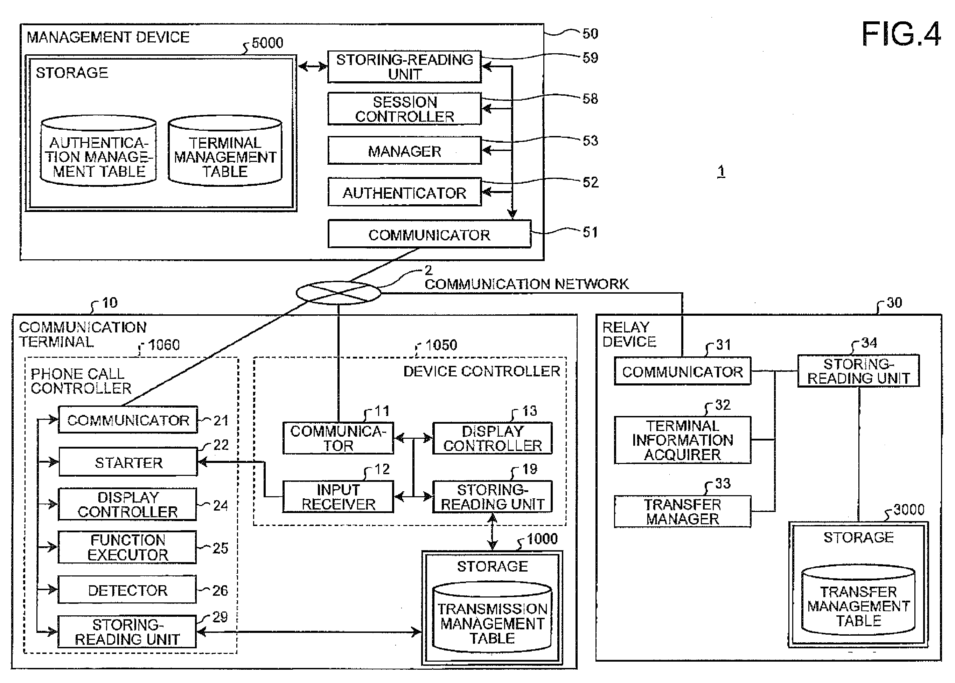

The following describes a functional configuration of devices in the communication system 1 according to the present embodiment. FIG. 4 is a functional block diagram of the communication terminal, the management device, and the relay device according to the embodiment. In FIG. 4, the communication terminal 10, the management device 50, and the relay device 30 are connected so as to perform communication of various kinds of data through the communication network 2.

### Functional Configuration of Communication Terminal

The communication terminal 10 includes a device controller 1050 and a phone call controller 1060. The device controller 1050 is achieved through execution of an OS, and the phone call controller 1060 is achieved through startup of, for example, a reception application. The OS provides a basic function and is basic software that entirely manages the communication terminal 10. The reception application is an application for connecting to the communication terminal 10 in the call center to talk to an operator.

The communication terminal 10 includes a storage 1000 constituted by the ROM 102, the RAM 103, and the flash memory 104 illustrated in FIG. 2. A storage region provided in the storage 1000 stores therein, for example, role information indicating the role of the own terminal, state information indicating the state of the own terminal, and relay-device connection information used to connect to the relay device 30e. The relay-device connection information includes the IP address, authentication information, and the port number of the relay device 30e, and a session ID for identifying the session sed1 (first communication) to be described later. The storage 1000 further stores therein a transmission management table for managing transmission control of sound and video data.

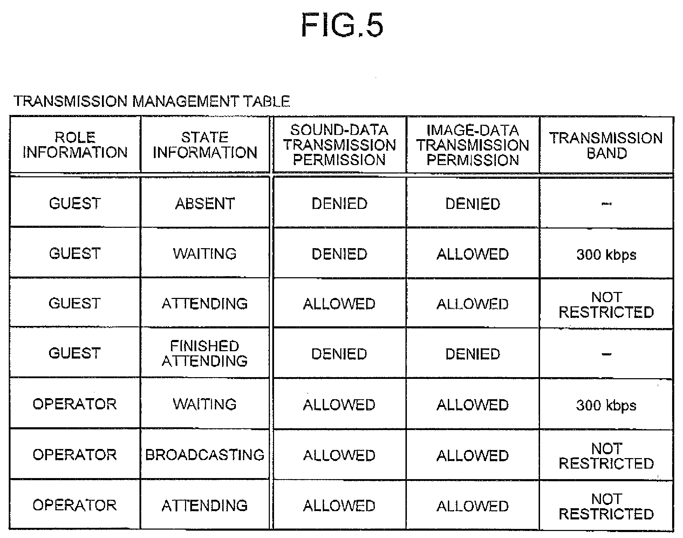

FIG. 5 illustrates an exemplary transmission management table. The transmission management table in the present embodiment stores therein, in association with one another, the role information indicating the role of the own terminal, the state information indicating the current state of the own terminal, sound-data transmission permission (transmission permission information) indicating whether sound data can be transmitted, image-data transmission permission (transmission permission information) indicating whether image data can be transmitted, and a transmission band (band information) indicating whether to restrict the transmission band and specifying a restricted transmission band when the transmission band is restricted.

The "role information" indicates the role of a user using the communication terminal 10. In FIG. 5, "operator" indicates a communication terminal 10 executing the reception application as an operator, and "guest" indicates a communication terminal 10 executing the reception application as a guest. The operator terminal corresponds to a first communication terminal, and the guest terminal corresponds to a second communication terminal.

The "state information" indicates the state of the communication terminal 10. Specifically, the state of "absent" indicates that a user is not in front of the communication terminal 10. The state of "waiting" indicates the state of the communication terminal 10 when the communication terminal 10 is in the virtual waiting room and a user is waiting for a phone call (talk). The state of "attending" indicates the state of the communication terminal 10 when a user is making a phone call. The state of "finished attending" indicates the state of the communication terminal 10 when a user has finished a phone call. The state of "broadcasting" indicates the state of the communication terminal 10 when image and sound data is being transmitted from an operator terminal to all guest terminals.

The communication terminal 10 refers to the transmission management table and performs a transmission control of content data including sound and image data in accordance with the sound-data and image-data transmission permissions and the transmission band corresponding to the role and state information of the own terminal.

For example, in the present embodiment, transmission of image and sound data is allowed for waiting operator terminals in the virtual waiting room to enable a talk therebetween. Transmission of image and sound data is also allowed for a broadcasting operator terminal in the virtual waiting room to enable a broadcast.

In the present embodiment, in order to save a transmission bandwidth in the virtual waiting room, the transmission band of image and sound data is restricted for a waiting guest terminal and a waiting operator terminal, and a transmission band (300 kbps in FIG. 5) is specified. The numerical value of the transmission band in FIG. 5 is an example, and may be set in accordance with the environment.

In FIG. 4, the device controller 1050 mainly includes a communicator 11, an input receiver 12, a display controller 13, and a storing-reading unit 19. These components are each a function achieved by any one of the components illustrated in FIG. 2 being operated in accordance with a command from the CPU 101 executing a startup application (program) loaded onto the RAM 103 from the flash memory 104. The following also describes a relation between each functional configuration of the device controller 1050 and main components for achieving the configuration among the components illustrated in FIG. 2.

The communicator 11 is achieved by the network I/F 111 in accordance with a command from the CPU 101, and transmits and receives various kinds of data to and from a communication terminal on the other end and devices through the communication network 2.

The input receiver 12 includes the operation button 108 and the power switch in accordance with a command from the CPU 101, and receives various inputs or various selections by a user. For example, when the power switch is turned on by the user, the input receiver 12 receives this turning-on of the power switch and then turns on the power.

In the present embodiment, when a plurality of communication terminals 10 are in the virtual waiting room after establishing the first communication (session sed1), the input receiver 12 of an operator terminal 10 receives selection of a guest terminal 10 with which the second communication (session sed2) is to be established among the guest terminals 10 with which the first communication is established. In the present embodiment, the input receiver 12 of the operator terminal 10 receives a transmission start operation instructing transmission of content data to all guest terminals 10 with which the first communication is established, which is a broadcast start operation. The input receiver 12 receives a broadcast stop operation when a broadcast is to be stopped. The start operation and the stop operation may be performed through buttons provided to an operator or buttons displayed on a screen in the virtual waiting room.

The display controller 13 is achieved by the display T/F 117 in accordance with a command from the CPU 101, and performs control to display image data transmitted from the other end in a phone call on the display 120.

The storing-reading unit 19 is achieved by the SSD 105 in accordance with a command from the CPU 101 or achieved in accordance with a command from the CPU 101, and performs processing to store various kinds of data in the storage 1000 and read out various kinds of data stored in the storage 1000.

The phone call controller 1060 includes a communicator 21, a starter 22, a display controller 24, a function executor 25, a detector 26, and a storing-reading unit 29. These components are each a function achieved by any one of the components illustrated in FIG. 2 being operated in accordance with a command from the CPU 101 executing the reception application (program) loaded onto the RAM 103 from the flash memory 104. The following also describes a relation between each functional configuration of the phone call controller 1060 and main components for achieving the configuration among the components illustrated in FIG. 2.

The communicator 21 is achieved by the network I/F 111 in accordance with a command from the CPU 101, and transmits and receives various kinds of data to and from a communication terminal on the other end and devices through the communication network 2.

In the present embodiment, when the first communication or the second communication is established, the communicator 21 transmits and receives content data to and from an operator terminal 10 and a guest terminal 10 through the relay device 30. In the present embodiment, when the broadcast start operation (transmission start operation) is received by the input receiver 12, the communicator 21 of the operator terminal 10 transmits a broadcast transmission request (transmission request) received together with content data to the relay device 30.

The starter 22 is achieved in accordance with a command from the CPU 101, and starts up, when the input receiver 12 of the device controller 1050 receives selection of an application by a user, operation of the phone call controller 1060 (for example, the reception application) based on a startup request from the input receiver 12.

The display controller 24 is achieved by the display I/F 117 in accordance with a command from the CPU 101, and performs control to display screen data on the display 120.

The function executor 25 is achieved by the camera 112, the microphone 114, or the speaker 115 in accordance with a command from the CPU 101, and performs control of the communicator 21 to achieve a phone call by image or sound, for example.

In the present embodiment, the function executor 25 controls communication of content data by the communicator 21. The function executor 25 controls transmission of content data based on the transmission management table (FIG. 5).

When the first communication is established between a plurality of communication terminals, the function executor 25 controls, referring to the transmission management table, the communicator 21 to transmit and receive content data to and from other communication terminals in a predetermined transmission band. Specifically, the function executor 25 of an operator terminal 10 controls the communicator 21 to transmit and receive content data to and from other operator terminals 10. The function executor 25 of the operator terminal 10 also controls the communicator 21 not to transmit content data to the guest terminal 10 but to receive content data therefrom.

When the second communication is established with a guest terminal 10 selection of which is received, the function executor 25 of the operator terminal 10 controls the communicator 21 to transmit and receive content data to and from the guest terminal 10 selection of which is received. When the broadcast start operation from a user is received by the input receiver 12, the function executor 25 of the operator terminal 10 controls the communicator 21 to transmit content data to all guest terminals 10.

The detector 26 is achieved in accordance with a command from the CPU 101, and analyzes image data based on an image captured by the camera 112 or sound data based on sound input from the microphone 114 to detect any user in an image capturing range or a sound collecting range of the communication terminal 10. When the external-device connecting I/F 118 of the communication terminal 10 is connected with any detection device for detecting a user, the detector 26 may be achieved by this external detection device.

The storing-reading unit 29 is achieved by the SSD 105 in accordance with a command from the CPU 101 or achieved in accordance with a command from the CPU 101, and performs processing to store various kinds of data in the storage 1000 and read out various kinds of data stored in the storage 1000.

### Functional Configuration of Management Device

The management device 50 includes a communicator 51, an authenticator 52, a manager 53, a session controller 58, and a storing-reading unit 59. These components are each a function or means achieved by any one of the components illustrated in FIG. 3 being operated in accordance with a command from the CPU 201 executing a computer program for the management device 50 loaded onto the RAM 203 from the HD 204.

The management device 50 includes a storage 5000 constituted by the HD 204. The storage 5000 stores therein an authentication management table used to authenticate the communication terminal 10, and a terminal management table used to manage the state of the communication terminal 10.

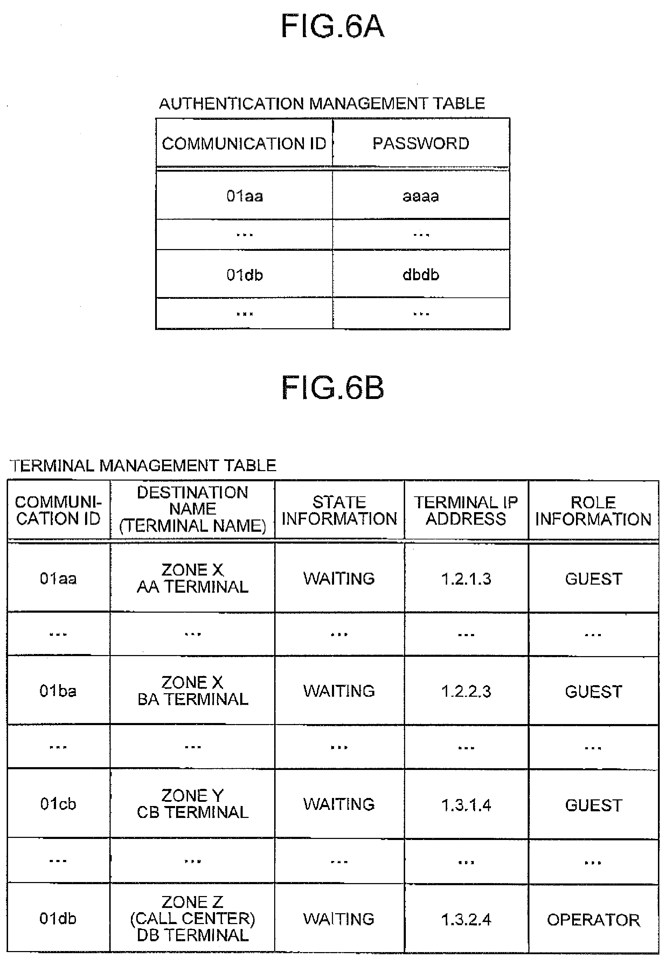

FIG. 6A illustrates an exemplary authentication management table. The authentication management table in the present embodiment stores therein, in association with each other, communication IDs and authentication passwords of all communication terminals 10 managed by the management device 50. The communication ID is information for identifying the destination (communication target) of content data in each session (the first communication or the second communication) to be described later. The communication ID may be, for example, information for identifying the user of a communication terminal 10 when the communication target can be specified, as well as information for identifying the communication terminal 10.

FIG. 6B illustrates an exemplary terminal management table. The terminal management table in the present embodiment stores therein the communication ID of each communication terminal 10, a destination name (terminal name) when the communication terminal 10 is a destination, the state information of the communication terminal 10, the IP address of the communication terminal 10, and the role information of the communication terminal 10 in association with one another.

With reference to FIG. 4, each functional configuration of the management device 50 is described in detail below. The following also describes a relation between each functional configuration of the management device 50 and main components for achieving the configuration among the components illustrated in FIG. 3.

The communicator 51 is achieved by the network I/F 209 in accordance with a command from the CPU 201, and transmits and receives various kinds of data to and from communication terminals and devices through the communication network 2. In the present embodiment, the communicator 51 receives, from a communication terminal 10, the state information indicating the state of the communication terminal 10.

The authenticator 52 is achieved in accordance with a command from the CPU 201, and searches the authentication management table (refer to FIG. 6A) using a communication ID and a password as a search key received by the communicator 51 to determine whether the same communication ID and password are managed in the authentication management table, thereby performing authentication of the communication terminal 10.

The manager 53 is achieved in accordance with a command from the CPU 201, and manages the latest state of the communication terminal 10 by using the terminal management table (refer to FIG. 6B). In the present embodiment, the manager 53 stores the state information of the communication terminal 10 received by the communicator 51 in the terminal management table. When the state of the communication terminal 10 is updated, the manager 53 updates various kinds of information in the terminal management table.

The session controller 58 controls a session (communication) of transmitting content data between communication terminals 10 in accordance with a command from the CPU 201. Examples of this control include control to establish a session, control to allow a communication terminal 10 to participate in the established session, control to disconnect the session, and control to transmit content data in the established session.

The storing-reading unit 59 is achieved by the HDD 205 in accordance with a command from the CPU 201 or achieved in accordance with a command from the CPU 201, and performs processing to store various kinds of data in the storage 5000 and extract various kinds of data stored in the storage 5000.

### Functional Configuration of Relay Device

The relay device 30 includes a communicator 31, a terminal information acquirer 32, a transfer manager 33, and a storing-reading unit 34. These components are each a function or means achieved by any one of the components illustrated in FIG. 3 being operated in accordance with a command from the CPU 201 executing the program for the relay device 30 loaded onto the RAM 203 from the HD 204.

The relay device 30 includes a storage 3000 constituted by the HD 204. The storage 3000 stores therein a transfer management table used in transfer management of content data transmitted and received between communication terminals 10 in the virtual waiting room.

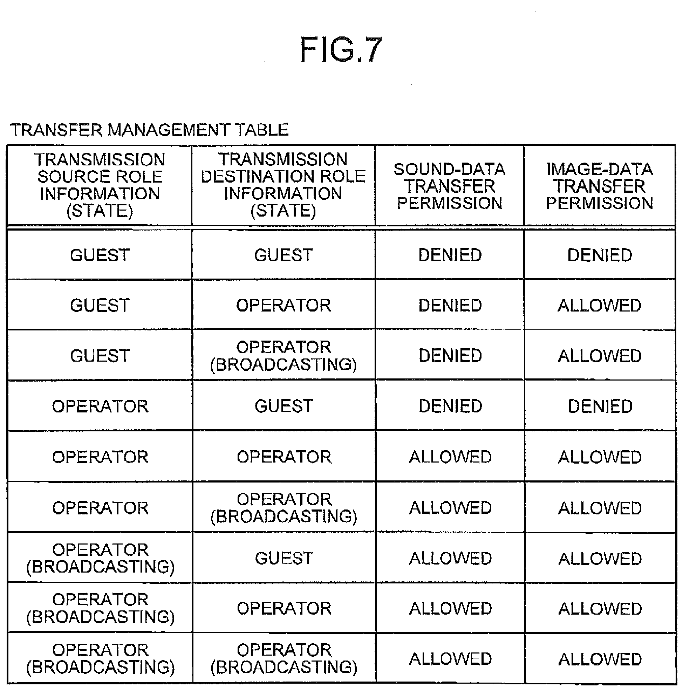

FIG. 7 illustrates an exemplary transfer management table. The transfer management table in the present embodiment stores therein, in association with one another, the role information (state) (source information) of a communication terminal 10 as the transmission source of content data, the role information (state) (destination information) of a communication terminal 10 as the destination of the content data, sound-data transfer permission (transfer permission information) indicating whether to allow sound data to be transferred, and image-data transfer permission (transfer permission information) indicating whether to allow image data to be transferred.

The relay device 30 acquires the state information and the role information of the communication terminals 10 as the source and the destination stored in the terminal management table (refer to FIG. 6B) from the management device 50. Then, referring to the transfer management table (FIG. 7), the relay device 30 performs a transfer control of sound and image data in content data in accordance with the sound-data and image-data transfer permissions corresponding to the state information and the role information thus acquired. When updated, the state information and the role information are notified to the relay device 30 by the management device 50. The relay device 30 changes the transfer control in response to this notification.

For example, in the present embodiment, transmission of image and sound data is allowed between operator terminals 10 in the virtual waiting room to enable a talk therebetween. Transmission of image and sound data to a guest terminal 10 is allowed for a broadcasting operator terminal 10 in the virtual waiting room to enable a broadcast.

With reference to FIG. 4, each functional configuration of the relay device 30 is described in detail below. The following also describes a relation between each functional configuration of the relay device 30 and main components for achieving the configuration among the components illustrated in FIG. 3.

The communicator 31 is achieved by the network I/F 209 in accordance with a command from the CPU 201, and transmits and receives various kinds of data to and from communication terminals and devices through the communication network 2.

In the present embodiment, the communicator 31 relays communication of content data between a plurality of communication terminals with which the first communication or the second communication is established. The communicator 31 receives content data and a transmission request to transmit the content data to all guest terminals 10 from an operator terminal 10 with which the first communication is established.

The terminal information acquirer 32 is achieved in accordance with a command from the CPU 201, and acquires the state information and the role information of a communication terminal 10 from the management device 50. When the terminal management table stored in the management device 50 is updated, the state information and the role information of the communication terminal 10 thus updated are notified to the terminal information acquirer 32 by the management device 50, and acquired by the terminal information acquirer 32.

The transfer manager 33 is achieved in accordance with a command from the CPU 201, and performs transfer management to allow or disallow communication of content data between guest terminals 10 and operator terminals 10.

In the present embodiment, the transfer manager 33 allows or disallows communication of content data between guest terminals 10 and operator terminals 10 in the virtual waiting room based on the transfer management table (FIG. 7). Specifically, for example, when the first communication is established between a plurality of communication terminals 10, the transfer manager 33 allows communication of image and sound data between operator terminals 10. The transfer manager 33 does not allow transmission of sound and image data from an operator terminal 10 to a guest terminal 10, and does not allow transmission of sound data but allows transmission of image data from the guest terminal 10 to the operator terminal 10.

Having received a transmission request from an operator terminal 10 when the first communication is established between a plurality of communication terminals 10, the transfer manager 33 allows transmission of sound and image data from the operator terminal 10 to all guest terminals 10. When the second communication is established between the operator terminal 10 and a guest terminal 10 selection of which is received by the operator terminal 10, the transfer manager 33 allows communication of sound and image data between the operator terminal 10 and the guest terminal 10 selection of which is received.

The storing-reading unit 34 is achieved by the HDD 205 in accordance with a command from the CPU 201 or achieved in accordance with a command from the CPU 201, and performs processing to store various kinds of data in the storage 3000 and extract various kinds of data stored in the storage 3000.

### State Transition of Communication Terminal

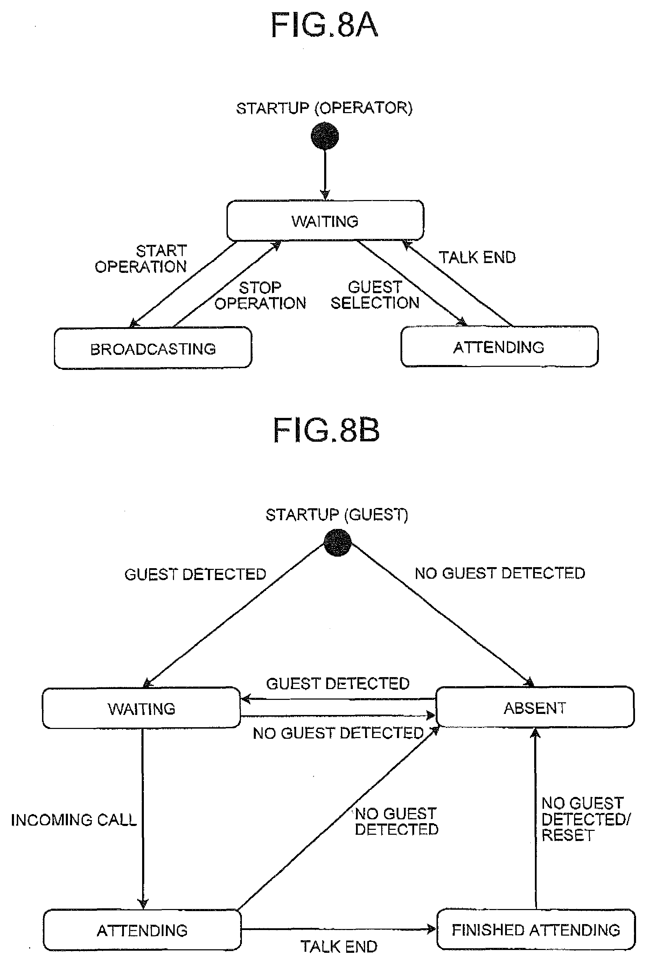

The following describes transition of the state of communication terminals 10 operated by an operator and a guest. FIG. 8A is a state transition diagram illustrating transition of the state of an operator terminal. As illustrated in FIG. 8A, when the reception application is started up on the operator terminal 10, the operator terminal 10 becomes the state of "waiting". Having received the broadcast start operation by the operator while the operator terminal 10 is in the state of "waiting", the operator terminal 10 transitions to the state of "broadcasting". Thereafter, having received the broadcast stop operation by the operator, the operator terminal 10 returns to the state of "waiting". Having received selection of a guest terminal 10 by the operator while the operator terminal 10 is in the state of "waiting", the operator terminal 10 becomes the state of "attending", and returns to the state of "waiting" when a phone call is ended.

FIG. 8B is a state transition diagram illustrating transition of the state of a guest terminal. As illustrated in FIG. 8B, the guest terminal 10 becomes the state of "waiting" when the reception application is started up on the guest terminal 10 and the detector 26 detects a user, and becomes the state of "absent" when no user is detected. The guest terminal 10 becomes the state of "absent" when no user is detected while the guest terminal 10 is in the state of "waiting", and transitions to the state of "attending" when a call is received from an operator terminal 10 to start a talk. The guest terminal 10 becomes the state of "absent" when no user becomes detected while the guest terminal 10 is in the state of "attending", and transitions to the state of "finished attending" when a phone call is ended. The guest terminal 10 transitions to the state of "absent" when no user becomes detected or a reset is performed while the guest terminal 10 is in the state of "finished attending". The guest terminal 10 becomes the state of "waiting" when a user is detected while the guest terminal 10 is in the state of "absent".

When the state of the communication terminal 10 transitions as described above, the function executor 25 changes and stores the state information of the own terminal in the storage 1000 through the storing-reading unit 29. The function executor 25 requests, through the communicator 21, the management device 50 to manage the state information of the communication terminal 10. When the communicator 51 of the management device 50 receives this request, the manager 53 stores, through the storing-reading unit 59, the state information in association with the communication ID of the communication terminal 10 in the terminal management table (refer to FIG. 6B).

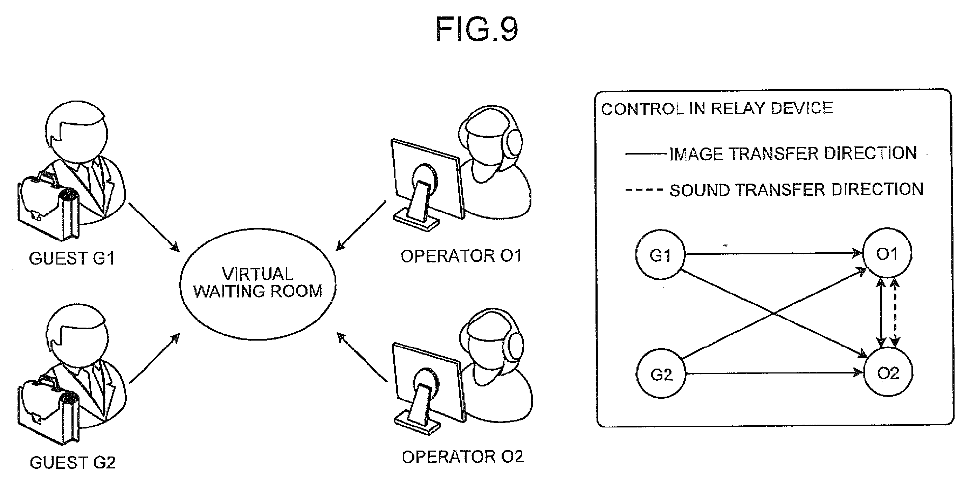

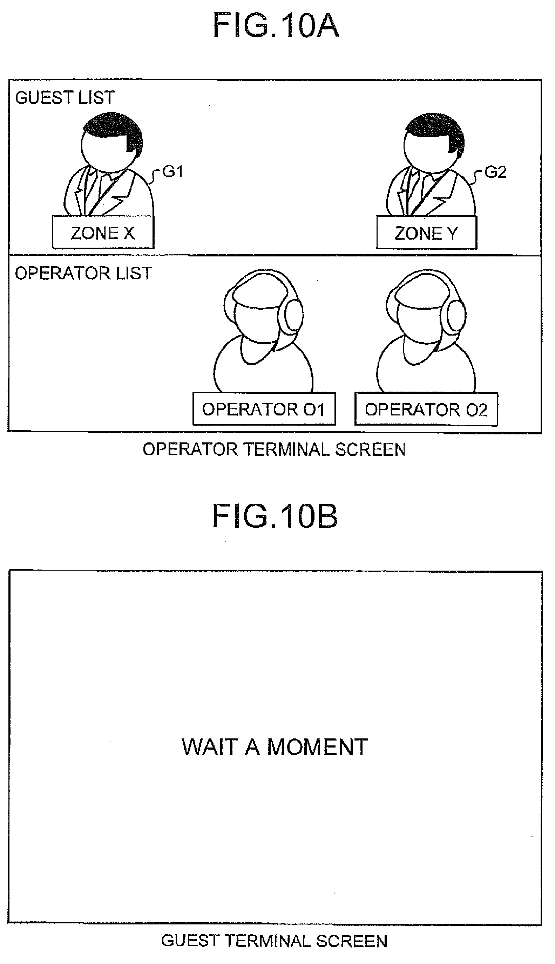

The following schematically describes the virtual waiting room. FIG. 9 is a schematic diagram of the virtual waiting room when no operator is performing a broadcast. FIG. 10A is a pattern diagram illustrating an exemplary screen displayed on an operator terminal in the case of FIG. 9. FIG. 10B is a pattern diagram illustrating an exemplary screen displayed on a guest terminal in the case of FIG. 9.

In FIG. 9, guests G1 and G2 and operators O1 and 02 are in the virtual waiting room. In this case, the relay device 30 transfers image data of the guests G1 and G2 to the operators O1 and O2, but does not transfer image and sound data of the operators 01 and 02 to the guests G1 and G2. The relay device 30 transfers image and sound data between the operators (operators 01 and 02).

In this state, the operators O1 and O2 can see videos of the guests G1 and G2 and the operators O1 and 02, and can hear sound of the operators O1 and 02. Accordingly, as illustrated in FIG. 10A, a screen of the operator terminal 10 displays videos and zone names (the zones X and Y) of the guests G1 and G2 side by side on its upper side, and displays videos of the operators O1 and 02 side by side on its lower side. The operators O1 and 02 can hear sound of the operators O1 and O2 as well as videos.

In contrast, the guests G1 and G2 cannot see videos of the operators O1 and O2 and the guests G1 and G2 nor hear sound thereof. Thus, as illustrated in FIG. 10B, a screen of the guest terminal 10 displays no videos of the operators 01 and 02 and the guests G1 and G2, but displays a message (for example, "wait a moment") in accordance with the states of the guests G1 and G2.

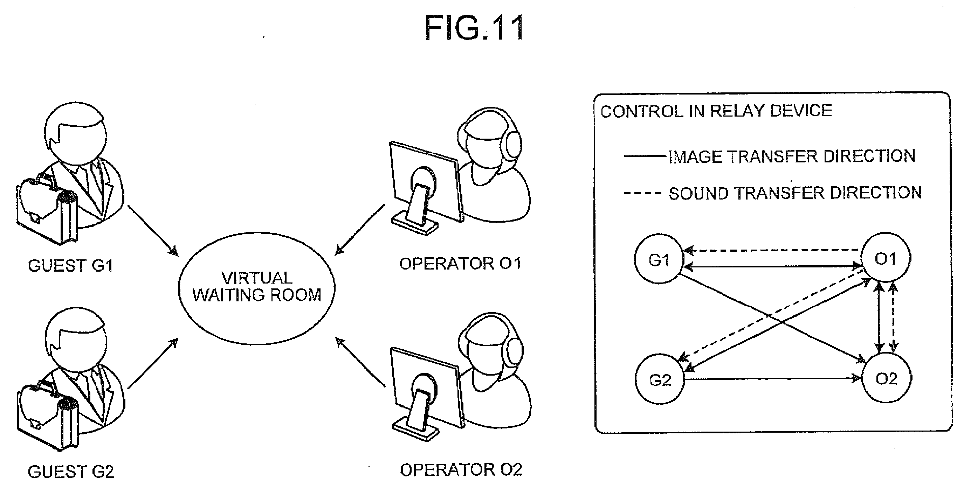

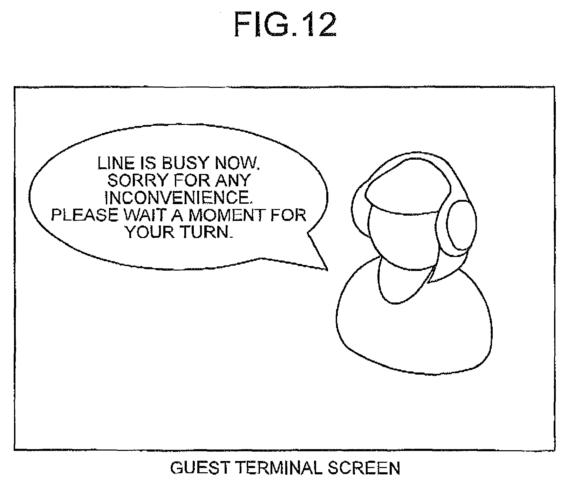

FIG. 11 is a schematic diagram of the virtual waiting room when the operator 01 is performing a broadcast. FIG. 12 is a pattern diagram illustrating an exemplary screen displayed on a guest terminal in the case of FIG. 11. A screen displayed on an operator terminal in the case of FIG. 11 is the same as that in FIG. 10A,

Similarly to FIG. 9, in FIG. 11, the guests G1 and G2 and the operators O1 and O2 are in the virtual waiting room. In this case, the relay device 30 transfers image data of the guests G1 and G2 to the operators O1 and 02, and transfers image and sound data of the operator 01 that is performing a broadcast to the guests G1 and G2. Similarly to FIG. 9, the relay device 30 transfers image and sound data between the operators (the operators O1 and 02). In other words, the relay device 30 transmits image and sound data from the operator O1 to all guests (G1 and G2) in a one-direction manner as in broadcasting.

Thus, the operators O1 and O2 can see videos of the guests G1 and G2 and the operators O1 and 02, and can hear sound of the operators O1 and 02. Thus, the same screen as that in FIG. 10A is displayed.

In contrast, the guests G1 and G2 cannot see videos of the operator 02 and the guests G1 and G2 or hear sound thereof, but can see a video of the operator O1 that is performing a broadcast and can hear sound thereof. In other words, as illustrated in FIG. 12, a video of the operator O1 is displayed on the screen of the guest terminal 10, and, for example, a balloon ("Line is busy ...") illustrated in FIG. 12 is actually played as sound. When a plurality of operators are simultaneously performing broadcasts, for example, a video of each operator is displayed on a divided screen.

### Processing and Operation of Communication System 1

The following describes a processing method in the communication system 1. First, establishment of a session (communication) will be described in detail. In the communication system 1 illustrated in FIG. 1, a session for transmitting image and sound data between terminals (10aa, 10ba, 10cb, 10db, 10dc, ...) is established. Hereinafter, this session is referred to as the session sed1. The relay device 30e relays communication of image and sound data between communication terminals 10 in the session sed1. In the present embodiment, the session sed1 is used as the virtual waiting room for waiting start of one-to-one communication between an operator terminal 10 (10da, 10db, 10dc, ...) in the zone Z (the call center) and a guest terminal 10 (10aa, 10ab, 10ac, 10ba, 10bb, 10bc, 10ca, 10cb, 10cc, ...) in the zones X and Y.

Upon reception of selection of any guest terminal 10 as a communication target by the operator terminal 10 in the virtual waiting room, a session for transmitting image and sound data is established through the relay device 30d with the guest terminal 10 thus selected. Hereinafter, this session is referred to as the session sed2. In the session sed2, the relay device 30d controls transmission of image and sound data to be allowed between the operator terminal 10 having received the selection and the guest terminal 10 thus selected. Accordingly, image and sound data can be transmitted in a bidirectional manner between the operator terminal 10 having received the selection and the guest terminal 10 thus selected, so that the operator and the guest can start a phone call.

The session sed1 and the session sed2 only need to be managed as different sessions, and may be established as different sessions through the same relay device 30.

### Authentication of Communication Terminal

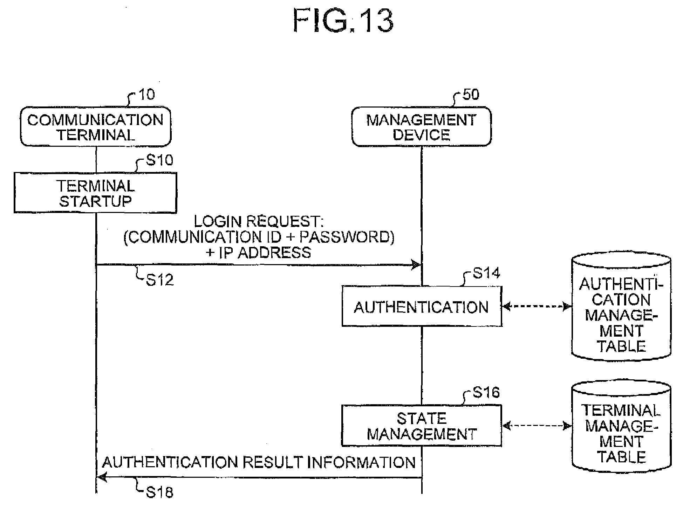

The following describes processing performed until a communication terminal 10 is authenticated after being started up. FIG. 13 is a sequence diagram illustrating the process of authentication of the communication terminal according to the embodiment.

First, when a user turns on the power switch 109 of the communication terminal 10, the input receiver 12 receives this turning-on of the power switch and starts up the communication terminal 10 (step S10). Upon this reception of the turning-on of the power switch, the communicator 11 sends a login request to the management device 50 through the communication network 2 (step S12). Then, the communicator 51 of the management device 50 receives the login request.

This login request includes a communication ID and a password for identifying the communication terminal 10 as the login requester. These communication ID and password are data read out from the storage 1000 through the storing-reading unit 19 and sent to the communicator 11. These communication ID and password may be input by the user of the communication terminal 10 as the requester. These communication ID and password may be information read out from the recording medium 106. Transmission of the login request from the communication terminal 10 to the management device 50 enables the management device 50 as a receiver to acquire the IP address of the communication terminal 10 as a transmitter.

Next, the authenticator 52 of the management device 50 searches the authentication management table (refer to FIG. 6A) in the storage 5000 using the communication ID and the password as a search key included in the login request to perform authentication by determining whether the same communication ID and password are managed in the authentication management table (step S14). If the authenticator 52 authenticates that the login request is from the communication terminal 10 having a legitimate access authority, the manager 53 stores the communication ID, the destination name (terminal name), the state information, the IP address, and the role information of the communication terminal 10 in association with one another in the terminal management table (refer to FIG. 6B) (step S16).

Then, the communicator 51 of the management device 50 transmits authentication result information indicating an authentication result obtained by the authenticator 52 to the communication terminal 10 as the login requester through the communication network 2 (step S18). Accordingly, the communicator 11 of the communication terminal 10 receives this authentication result information. When authenticated, the communication terminal 10 can participate in the session sed1.

### Participation in Session sed1 by Communication Terminal 10db on Operator Side

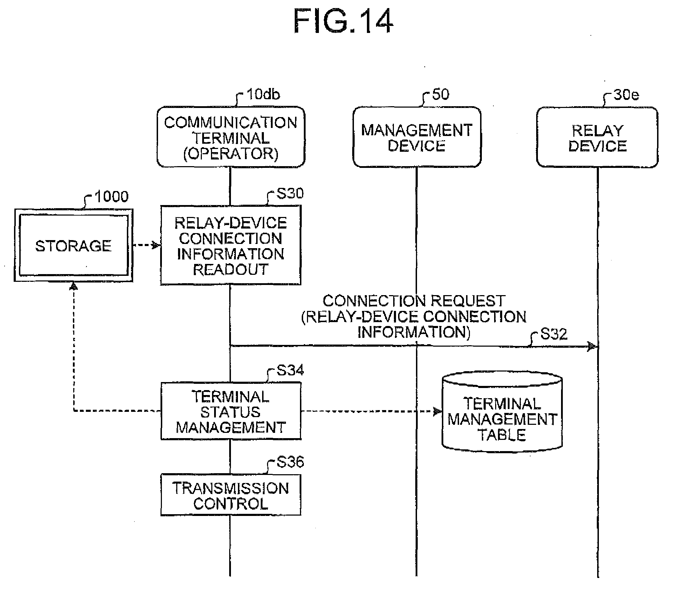

The following describes processing to be performed when the reception application is started up by the user of the communication terminal 10. FIG. 14 is a sequence diagram illustrating the process of participation in the session sed1 by the operator terminal according to the embodiment. In FIG. 14, processing by the communication terminal 10db as the operator terminal will be described.

When The communication terminal 10db is authenticated by the management device 50 and the reception application is started up, the storing-reading unit 29 reads out the relay-device connection information used to connect to the relay device 30e that relays image data in the session sed1 from the storage 1000 (step S30). The relay-device connection information includes the IP address, the authentication information, and the port number of the relay device 30e, and a session ID "se01" for identifying the session sed1. The relay-device connection information may be stored in the management device 50 in place of the communication terminal 10db, and may be acquired from the management device 50 through a network.

The communicator 11 of the communication terminal 10db transmits the relay-device connection information to the relay device 30e to request the relay device 30e to establish a connection (step S32). Accordingly, the communication terminal 10db and the relay device 30e are connected to allow the communication terminal 10db to participate in the session sed1.

Subsequently, the function executor 25 of the communication terminal 10db manages the state of the own terminal (step S34). Specifically, for example, the function executor 25 stores the state information "waiting" indicating the state of the own terminal in the storage 1000 through the storing-reading unit 29. The function executor 25 requests, through the communicator 21, the management device 50 to manage "waiting" as the state information of the communication terminal 10db. When the communicator 51 of the management device 50 receives this request, the manager 53 stores "waiting" as the state information in association with the communication ID "01db" of the communication terminal 10db in the terminal management table (refer to FIG. 6B) through the storing-reading unit 59.

Subsequently, the function executor 25 of the communication terminal 10db controls transmission of content data by the own terminal (step S36). Specifically, the storing-reading unit 29 reads out the state information "waiting" of the own terminal and the role information "operator" of the own terminal stored in the storage 1000. The storing-reading unit 29 reads out image-data and sound-data transmission permission information associated with the state information "waiting" and the role information "operator" of the own terminal and the transmission band from the transmission management table (refer to FIG. 5). The function executor 25 controls, based on the transmission permission information and the transmission band thus read out, the communicator 21 to transmit image and sound data from the communication terminal 10db to the relay device 30e in the specified transmission band. Accordingly, image and sound data is transmitted to the relay device 30e by the communication terminal 10db, and then to an operator terminal 10 participating in the session sed1.

### Participation in Session sed1 by Communication Terminal 10aa as Guest

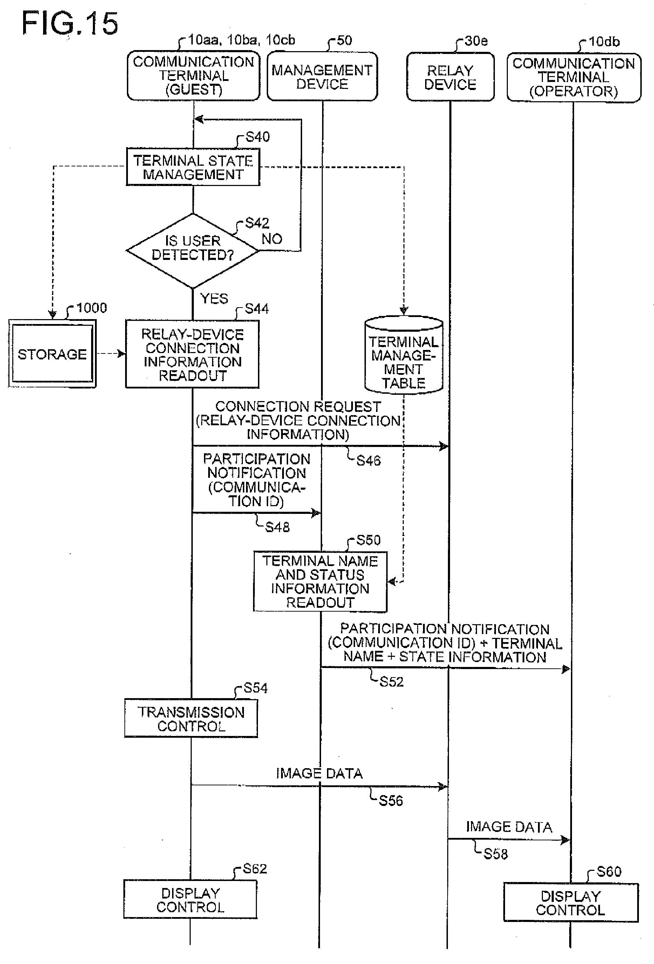

FIG. 15 is a sequence diagram illustrating the process of participation in the session sed1 by the guest terminal according to the embodiment. In FIG. 15, processing by the communication terminal 10aa as the guest terminal will be described.

The communication terminal 10aa is authenticated by the management device 50, and becomes the state of "waiting" when the reception application is started up. Subsequently, the function executor 25 of the communication terminal 10aa manages the state of the own terminal depending on whether the detector 26 detects a user (step S40). In other words, the function executor 25 determines whether a user is detected by the detector 26 (step S42). The communication terminal 10aa becomes the state of "absent" if no user is detected (No at step S42). The communication terminal 10aa becomes the state of "waiting" if a user is detected (Yes at step S42). Thus, depending on whether a user is detected by the detector 26, the function executor 25 stores the state of "waiting" or the state of "absent" as the state information of the own terminal in the storage 1000 through the storing-reading unit 29.

The function executor 25 requests, through the communicator 21, the management device 50 to manage the state of "waiting" or the state of "absent" as the current state of the terminal 10aa. When the communicator 51 of the management device 50 receives this request, the manager 53 stores, through the storing-reading unit 59, the state of "waiting" or the state of "absent" as the state information in association with the communication ID "01aa" of the terminal 10aa in the terminal management table (refer to FIG. 6B).

If the detector 26 detects a user (Yes at step S42), the storing-reading unit 59 reads out the relay-device connection information from the storage 1000 (step S44). The communicator 21 of the communication terminal 10aa transmits the relay-device connection information to the relay device 30e to request the relay device 30e to establish a connection (step S46). Accordingly, the communication terminal 10aa and the relay device 30e are connected to allow the communication terminal 10aa to participate in the session sed1.

When the communication terminal 10aa participates in the session sed1, the communicator 21 transmits a participation notification indicating participation of the own terminal in the session sed1 to the management device 50 (step S48). This participation notification includes the communication ID "01aa" of the own terminal. When the communicator 51 of the management device 50 receives the participation notification, the storing-reading unit 59 searches the terminal management table (refer to FIG. 6B) using the communication ID as a search key included in the participation notification to read out the corresponding terminal name and state information (step S50).

Then, the communicator 51 transmits the participation notification, and the terminal name and the state information read out at step S50 to the communication terminal 10db identified by the communication ID "01db" associated with the role information "operator" in the terminal management table (step S52).

Subsequently, the function executor 25 of the communication terminal 10aa controls transmission of content data by the own terminal (step S54). Specifically, the storing-reading unit 29 reads out the state information "waiting" and the role information "guest" of the own terminal stored in the storage 1000. The storing-reading unit 29 reads out, from the transmission management table (refer to FIG. 5), the image-data and sound-data transmission permission information and the transmission band associated with the state information "waiting" and the role information "guest" of the own terminal. The function executor 25 controls, based on the transmission permission information and the transmission band thus read out, the communicator 21 to transmit image data from the communication terminal 10aa to the relay device 30e in the specified transmission band but not to transmit sound data. Accordingly, the image data is transmitted to the relay device 30e by the communication terminal 10aa (step S56). The relay device 30e transmits this received image data to the operator terminal 10 (the communication terminal 10db in this example) based on the transfer management table (refer to FIG. 7) (step S58).

When the communicator 21 of the communication terminal 10db receives the image data transmitted from the communication terminal 10aa, the display controller 24 controls display of the image data thus received on the display 120db (step S60). Specifically, the display controller 24 displays the terminal name transmitted from the management device 50 at step S52 and the image data transmitted at step S58 in association with each other (refer to FIG. 10A). The display controller 24 may change the display position and the size of an image based on the image data transmitted from each communication terminal 10 depending on the state information of the communication terminal 10 transmitted from the management device 50 at step S52. For example, an image based on image data transmitted from a communication terminal 10 that is waiting may be displayed at a position more noticeable than the display position of a communication terminal 10 that has finished attending, or may be displayed in a larger size.

Since image data from the communication terminal 10db is not transmitted (refer to step S36), the display controller 24 of the communication terminal 10aa performs control to display on the display 120aa, for example, a message with a request to wait start of a phone call with an operator terminal except when the own terminal is participated in the session sed2 and is in the state of "attending" (step S62).

### Talk Between Operators and Broadcast

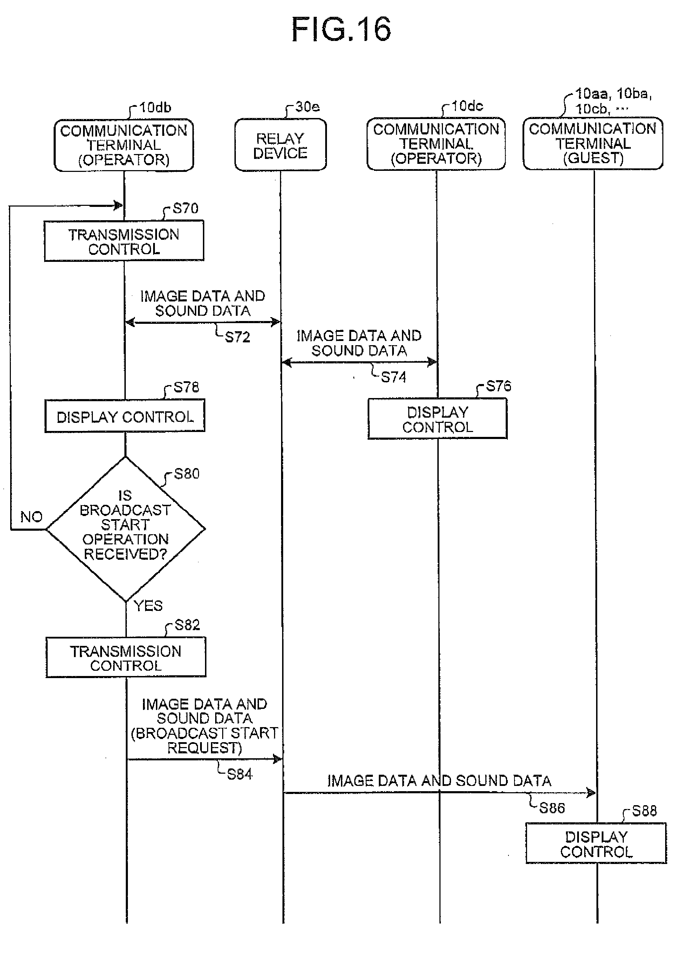

The following describes a talk between operators and a broadcast when a plurality of operator terminals and guest terminals are participating in the session sed1. FIG. 16 is a sequence diagram illustrating the process of processing of a talk and a broadcast between the operator terminals according to the embodiment. With reference to FIG. 16, a description will be made of processing when the communication terminals 10db and 10dc participate as the operator terminals, and the communication terminals 10aa, 10ba, 10cb ... participate as the guest terminals.

First, the function executor 25 of the communication terminal 10db participating in the session sed1 controls transmission of content data by the own terminal (step S70). Specifically, the storing-reading unit 29 reads out the state information "waiting" and the role information "operator" of the own terminal stored in the storage 1000. The storing-reading unit 29 reads out, from the transmission management table (refer to FIG. 5), the image-data and sound-data transmission permission information and the transmission band associated with the state information "waiting" and the role information "operator" of the own terminal. The function executor 25 controls, based on the transmission permission information and the transmission band thus read out, the communicator 21 to transmit image and sound data from the communication terminal 10db to the relay device 30e in the specified transmission band.

Accordingly, the image and sound data of the communication terminal 10db are transmitted to the relay device 30e (step S72). Then, the relay device 30e transmits this received image and sound data to the communication terminal 10dc as an operator terminal based on the transfer management table (refer to FIG. 7) (step S74), but not to the communication terminals 10aa, 10ba, 10cb ... as the guest terminals. In addition, image and sound data is transmitted from the communication terminal 10dc to the communication terminal 10db (steps S72 and S74).

Then, when the communicator 21 of each of the communication terminals 10db and 10dc receives the image and sound data thus transmitted, the display controller 24 of each of the communication terminals 10db and 10dc performs control to display the transmitted image data on the corresponding display 120db or 120dc and output the transmitted sound data (steps S76 and S78).

Next, if the input receiver 12 of the communication terminal 10db receives the broadcast start operation (Yes at step S80), the function executor 25 updates the state information to "broadcasting" and notifies the management device 50 of the updated state. Then, the function executor 25 controls transmission of content data by the own terminal (step S82). Specifically, the storing-reading unit 29 reads out the state information "broadcasting" and the role information "operator" of the own terminal stored in the storage 1000. The storing-reading unit 29 also reads out the image-data and sound-data transmission permission information and the transmission band associated with the state information "broadcasting" and the role information "operator" of the own terminal from the transmission management table (refer to FIG. 5). The function executor 25 controls, based on the transmission permission information and the transmission band thus read out, the communicator 21 to transmit image and sound data from the communication terminal 10db together with a broadcast start request to the relay device 30e.

Accordingly, the image and sound data of the communication terminal 10db and the broadcast start request are transmitted to the relay device 30e (step S84). Then, having received the image and sound data and the broadcast start request, the relay device 30e transmits the image and sound data thus received to the communication terminals 10aa, 10ba, 10cb ... as all guest terminals based on the transfer management table (refer to FIG. 7) (step S86). Simultaneously, the image and sound data is transmitted also to the operator terminal 10dc (refer to FIG. 7).

Then, when the communicator 21 of each of the communication terminals 10aa, 10ba, 10cb ... receives the image and sound data thus transmitted, the display controller 24 of each of the communication terminals 10aa, 10ba, 10cb ... performs control to display the transmitted image data on the corresponding display 120aa, 120ba, or 120cb ... and output the transmitted sound data (step S88). Accordingly, the screen as illustrated in FIG. 12 is displayed on the guest terminals 10aa, 10ba, 10cb ..., and sound is played.

### Participation in Session sed2

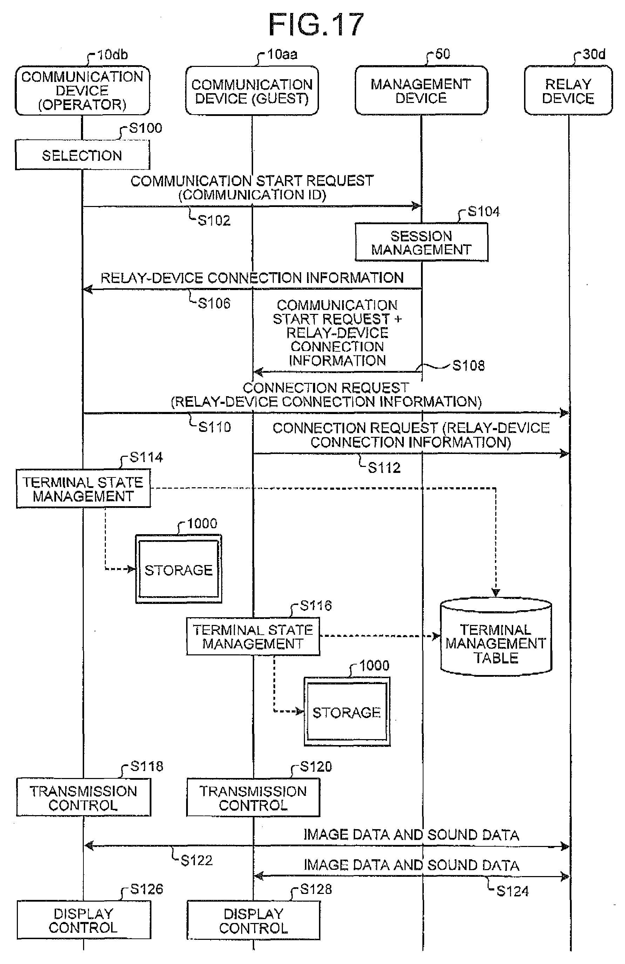

The following describes processing of participation of the communication terminals 10aa and 10db in the session sed2. FIG. 17 is a sequence diagram illustrating the process of participation in the session sed2 by the operator terminal and the guest terminal according to the embodiment.

The input receiver 12 of the communication terminal 10db receives selection of the terminal name of a communication target in the session sed2 among the guest terminals 10 displayed on a display screen by an operator (step S100). The following describes a case in which the communication terminal 10aa is selected as a communication target. The communicator 21 of the communication terminal 10db transmits a communication start request including the communication ID "01aa" of the communication terminal 10aa thus selected to the management device 50 (step S102).

When the communicator 51 of the management device 50 receives the communication start request, the session controller 58 selects the relay device 30 that relays content data in the session sed2 (step S104). The following describes a case in which the relay device 30d is selected. The session controller 58 generates a session ID "se02" for identifying the session sed2 at a step within processing of step S104.

In order to connect to the relay device 30d that relays content data in the session sed2, the communicator 51 transmits the relay-device connection information to the communication terminal 10db serving as a communication start requester (step S106). This information is stored in the storage 5000 of the management device 50 in advance or generated at step S104. The communicator 51 transmits the communication start request transmitted from the communication terminal 10db and the relay-device connection information to the communication terminal 10aa serving as a communication target (step S108).

The communicator 21 of each of the communication terminals 10db and 10aa transmits the relay-device connection information transmitted from the management device 50 to the relay device 30d to request the relay device 30d to establish connections (steps S110 and S112). Accordingly, the communication terminals 10db and 10aa and the relay device 30d are connected to establish the session sed2 between the terminals 10db and 10aa and the relay device 30d.

Then, the function executor 25 of the communication terminal 10db manages the state of the own terminal at a predetermined timing after a communication terminal 10 (guest) on the other end at step S100 is selected (step S114). Specifically, the function executor 25 of the communication terminal 10db changes the state information of the own terminal from the state of "waiting" to the state of "attending", and requests the management device 50 to manage the state of "attending" as the state information of the communication terminal 10db. When the communicator 51 of the management device 50 receives this request, the manager 53 stores the state information "attending" in association with the communication ID "01db" of the communication terminal 10db in the terminal management table (refer to FIG. 6B).

Similarly to step S114, upon the reception of the communication start request from the communication terminal 10db at step S108, the function executor 25 of the communication terminal 10aa manages the state of the own terminal (step S116).

Subsequently, the function executor 25 of the communication terminal 10db controls transmission of content data by the own terminal (step S118). Specifically, the storing-reading unit 29 reads out the image-data and sound-data transmission permission information and the transmission band managed in the transmission management table (refer to FIG. 5) in association with the state information "attending" and the role information "operator" of the own terminal stored in the storage 1000. The function executor 25 controls, based on the transmission permission information and the transmission band thus read out, the communicator 21 to transmit image and sound data from the communication terminal 10db to the relay device 30d.

Accordingly, the image and sound data of the communication terminal 10db is transmitted to the relay device 30d (step S122). The relay device 30d transmits this received image and sound data to the communication terminal 10aa participating in the session sed2 (step S124).

Similarly to step S118, the function executor 25 of the communication terminal 10aa controls transmission of content data by the own terminal (step S120). Accordingly, image and sound data of the communication terminal 10aa is transmitted to the relay device 30d (step S124). The relay device 30d transmits this received image and sound data to the communication terminal 10db participating in the session sed2 (step S122).

When the communication terminals 10db and 10aa receive the image and sound data transmitted from the respective communication terminals (10aa and 10db) serving as the communication targets, the display controller 24 of each of the communication terminals 10db and 10aa displays an image based on the image data thus transmitted on the display 120 of each of the communication terminals 10db and 10aa and outputs sound based on the sound data thus transmitted (steps S126 and S128).

When the communication terminal 10db is simultaneously participating in the session sed1 and the session sed2, the display controller 24 may control an image based on the image data transmitted in the session sed2 and an image based on the image data transmitted in the session sed1 in a switchable manner. Alternatively, the display controller 24 may display the image based on the image data transmitted in the session sed1 and the image based on the image data transmitted in the session sed2 on split areas in a display or on a plurality of displays. In this manner, the operator of the operator terminal 10db can recognize waiting degrees (status of the virtual waiting room) while in a phone call with the guest of the guest terminal 10aa.

### Exit from Session sed2

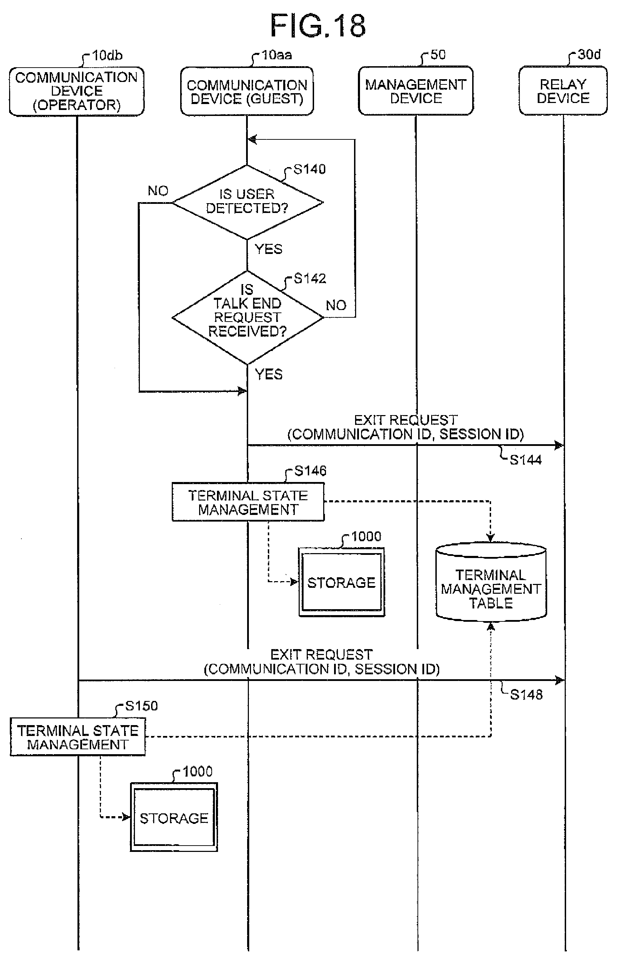

The following describes processing of the communication terminals 10db and 10aa when exiting from the session sed2. FIG. 18 is a sequence diagram illustrating the process of exiting from the session sed2 by the operator terminal and the guest terminal according to the embodiment.

If the detector 26 detects no user (No at step S140) in the communication terminal 10aa, or if the input receiver 12 receives inputting of a request to end a phone call (Yes at step S142), the communicator 21 transmits an exit request to request an exit from the session sed2 to the relay device 30d (step S144). The exit request includes the communication ID "01aa" of the own terminal and the session ID "se02" of the session sed2. Once the communication terminal 10aa exits from the session sed2 in response to the exit request, image and sound data cannot be transmitted and received between the communication terminal 10aa and the relay device 30d.

Upon detection of no user or reception of a phone-call end request, the function executor 25 of the communication terminal 10aa manages the state of the own terminal (step S146). Specifically, the function executor 25 of the communication terminal 10aa changes the state information of the own terminal from the state of "attending" to the state of "absent" or to the state of "finished attending", and requests the management device 50 to manage the state of "absent" or the state of "finished attending" as the current state of the communication terminal 10aa. When the communicator 51 of the management device 50 receives this request, the manager 53 stores the state information "absent" or "finished attending" in association with the communication ID "01aa" of the communication terminal 10aa in the terminal management table (refer to FIG. 6B).

When the state is changed to the state of "finished attending" at step S146, the function executor 25 changes the state of the own terminal to the state of "absent" upon detection of no user by the detector 26 for a certain period of time or reception of inputting of resetting by the input receiver 12. This processing is the same as the processing at step S146, and thus description thereof is omitted.

Upon detection of no user or reception of a request to end a phone call in the communication terminal 10aa, the communication terminal 10db exits from the session sed2 similarly to step S144 (step S148). A method for the communication terminal 10db to recognize the detection of no user and the reception of a request to end a phone call in the communication terminal 10aa is not particularly limited. Examples of such a method include a method of receiving a notification from the communication terminal 10aa, and a method of receiving a notification of the state information of the communication terminal 10aa from the management device 50. Having exited from the session sed2, the communication terminal 10aa as a guest terminal participates in the session sed1 again upon detection of a user at step S40.

Then, the function executor 25 of the communication terminal 10db manages the state of the own terminal (step S150). Specifically, the function executor 25 of the communication terminal 10db changes the state information of the own terminal from the state of "attending" to the state of "waiting", and requests the management device 50 to manage the state of "waiting" as the current state of the communication terminal 10db. When the communicator 51 of the management device 50 receives this request, the manager 53 stores the state information "waiting" in association with the communication ID "01db" of the communication terminal 10db in the terminal management table (refer to FIG. 6B). Having exited from the session sed2, the operator terminal 10db receives selection of a guest of the next phone call at step S100.

### Effects of Embodiment

As described above, in the communication system 1 according to the present embodiment, a plurality of communication terminals 10 operated by operators and guests participate in the session sed1 (first communication) to enter the virtual waiting room. Then, each communication terminal 10 transmits and receives content data (image and sound data, for example) through the relay device 30 in accordance with the state and role of the own terminal. In the present embodiment, an operator terminal 10 can browse a list of videos of guests in the virtual waiting room, and a plurality of operators have a communication by video and sound therebetween through communication of content data between operator terminals 10. Having received a predetermined operation, the operator terminal 10 temporarily transmits content data to all guest terminals 10 in the virtual waiting room, thereby having a one-directional communication (broadcast) by video and sound with all guests in the virtual waiting room. In other words, a many-to-many communication as well as a one-to-one communication can be performed in communication between terminals. Moreover, a reduced transmission band in the virtual waiting room can be achieved by restricting the transmission band of content data.

A program executed by the communication terminal 10 in the present embodiment is provided as a file in an installable or executable format recorded on a computer-readable recording medium such as a CD-ROM, a flexible disk (FD), a CD-R, or a digital versatile disc (DVD).

The program executed by the communication terminal 10 in the present embodiment may be stored in a computer connected to a network such as the Internet and provided through downloading via the network. Alternatively, the program executed by the communication terminal 10 in the present embodiment may be provided or distributed via a network such as the Internet. Alternatively, the program executed by the communication terminal 10 in the present embodiment may be written in a ROM or the like in advance and provided.

The program executed by the communication terminal 10 in the present embodiment is configured as a module including the components described above (the communicator 11, the input receiver 12, the display controller 13, the storing-reading unit 19, the communicator 21, the starter 22, the display controller 24, the function executor 25, the detector 26, and the storing-reading unit 29). A CPU (processor) as actual hardware reads the program from the recording medium described above, and executes the program to load the components described above onto a main storage device, thereby generating the components on the main storage device. Alternatively, for example, part or all of the functionality of the components described above may be achieved by a dedicated hardware circuit.

The management device 50 and the program providing device 90 in the embodiment may be constituted by a single computer or may be constituted by a plurality of computers optionally allocated for divided components (function or means). When the program providing device 90 is constituted by a single computer, a computer program transmitted by the program providing device 90 may be divided into a plurality of modules to be transmitted, or may be transmitted as a whole. When the program providing device 90 is constituted by a plurality of computers, the program may be transmitted from each computer as a plurality of divided modules.

The recording medium that stores therein a terminal program, a relay-device program, and a communication management program of the communication system 1, and the HD 204 that stores these programs, and the program providing device 90 including the HD 204 are used when the terminal program, the relay-device program, and the communication management program are provided as a computer program product to, for example, domestic and foreign users.

The IP address of the communication terminal 10 is managed in the terminal management table (refer to FIG. 6B) in the communication system 1, but the present invention is not limited thereto. Any terminal specific information, such as a fully qualified domain name (FQDN), for specifying the communication terminal 10 on the communication network 2 may be managed. In this case, the IP address corresponding to a FQDN is acquired by a known domain name system (DNS) server.

The communication system 1 may be an audio conference system or a personal-computer (PC) screen sharing system. Alternatively, the communication system 1 may be a communication system such as an Internet protocol (IP) phone, an Internet phone, or a mobile phone. In this case, for example, the communication terminal 10 corresponds to a telephone such as a mobile phone.

The embodiment above describes the case of a video conference terminal as an exemplary communication terminal, but the present invention is not limited thereto. The communication terminal may be a telephone system such as an Internet protocol (IP) phone or an Internet phone. Alternatively, the communication terminal may be a smartphone, a mobile phone, a car navigation terminal, a wearable computer, a monitoring camera, an electronic chalkboard, a gaming device, or an industrial device having a communication function. Examples of wearable computers include a wristwatch and a head-mounted display. Examples of industrial devices include an office device such as a multifunction peripheral/printer/product (MFP), a medical device such as an endoscope, and an agricultural device such as a cultivator.

The embodiment above describes image and sound data as an exemplary content data, but the present invention is not limited thereto. The content data is preferably media for achieving a real-time communication. Examples of the media include image data of still image and moving image, sound data, and streaming data such as screen sharing data, message, stroke data, and operating data.

The communication terminal 10 may be used for, in addition to an indoor-indoor phone call, a phone call between a plurality of offices, a phone call between different rooms within the same office, a phone call within the same room, an outdoor-indoor phone call, and an outdoor-outdoor phone call. When the communication terminal 10 is used outdoors, a wireless communication through, for example, a mobile phone communication network is performed. The embodiment above describes a virtual reception system achieved by the communication system 1, but the present invention is not limited thereto, and is applicable to a meeting, an informal talk between family members and friends, or an one-directional presentation of information.

An embodiment enables a many-to-many communication as well as a one-to-one communication in communication between terminals and can achieve a reduced transmission band.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A communication system in which a plurality of communication terminals including first communication terminals and second communication terminals are connected through a network, the communication system comprising:
a communicator that transmits and receives content data;
an executor that controls, when first communication is established between communication terminals, the communicator to transmit and receive content data to and from a first communication terminal and not to transmit content data to a second communication terminal but to receive content data from the second communication terminal, in a predetermined transmission band; and
a receiver that receives selection of a second communication terminal with which second communication is to be established, from at least one second communication terminal with which the first communication is established, wherein
when the second communication is established with the second communication terminal selection of which is received, the executor controls the communicator to transmit and receive content data to and from the second communication terminal selection of which is received.

2. The communication system according to claim 1, wherein
the receiver receives a transmission start operation to start transmitting content data to the second communication terminal with which the first communication is established, and
the executor performs, having received the transmission start operation, control to transmit the content data to the second communication terminal.

3. The communication system according to claim 1 or 2, further comprising a storage that stores therein transmission management information including role information indicating whether a communication terminal is a first communication terminal or a second communication terminal, state information indicating a current state of the communication terminal, transmission permission information indicating whether transmission of content data is permitted, and band information specifying the transmission band, in association with one another, wherein
the executor controls transmission of content data based on the transmission management information.

4. The communication system according to any one of claims 1 to 3, wherein
the communication system is further connected, through a network, with a relay device that relays communication of the content data between the plurality of communication terminals, and
the communicator transmits and receives the content data through the relay device.

5. A communication method to be executed in a communication system in which a plurality of communication terminals including first communication terminals and second communication terminals are connected through a network, the method comprising:
transmitting and receiving content data;
executing, when first communication is established between communication terminals, control to transmit and receive content data to and from a first communication terminal and not to transmit content data to a second communication terminal but to receive content data from the second communication terminal, in a predetermined transmission band; and
receiving selection of a second communication terminal with which second communication is to be established, from at least one second communication terminal with which the first communication is established, wherein
when the second communication is established with the second communication terminal selection of which is received, performing, at the executing, control to transmit and receive the content data to and from the second communication terminal selection of which is received.

6. A computer program product comprising a non-transitory computer-readable medium containing an information processing program, the program causing a computer connected with a plurality of communication terminals including first communication terminals and second communication terminals through a network, to function as:
a communicator that transmits and receives content data;
an executor that controls, when first communication is established between communication terminals, the communicator to transmit and receive content data to and from a first communication terminal and not to transmit content data to a second communication terminal but to receive content data from the second communication terminal, in a predetermined transmission band; and
a receiver that receives selection of a second communication terminal with which second communication is to be established, from at least one second communication terminal with which the first communication is established, wherein
when the second communication is established with the second communication terminal selection of which is received, the executor controls the communicator to transmit and receive content data to and from the second communication terminal selection of which is received.

7. A relay device connected with a plurality of communication terminals including first communication terminals and second communication terminals through a network, the relay device comprising:
a communicator that relays communication of content data between the plurality of communication terminals; and
a transfer manager that, when first communication is established between communication terminals, allows communication of content data between first communication terminals, and does not allow transmission of content data from the first communication terminals to a second communication terminal but allows transmission of content data from the second communication terminal to the first communication terminals, wherein
the transfer manager allows, when second communication is established between a first communication terminal and a second communication terminal selection of which is received by the first communication terminal, communication of content data between the first communication terminal and the second communication terminal selection of which is received.

8. The relay device according to claim 7, wherein
the communicator receives a transmission request to transmit content data from a first communication terminal with which the first communication is established to the second communication terminal, and
the transfer manager allows, having received the transmission request, transmission of the content data from the first communication terminal to the second communication terminal.

9. The relay device according to claim 7 or 8, further comprising a storage that stores therein transfer management information including source information indicating whether a source of content data is a first communication terminal or a second communication terminal, destination information indicating whether a destination of the content data is a first communication terminal or a second communication terminal, and transfer permission information indicating whether transfer of the content data is permitted in association with one another, wherein
the transfer manager allows communication of the content data based on the transfer management information.

10. A computer program product comprising a non-transitory computer-readable medium containing an information processing program, the program causing a computer connected with a plurality of communication terminals including first communication terminals and second communication terminals through a network, to function as:
a communicator that relays communication of content data between the plurality of communication terminals; and
a transfer manager that, when first communication is established between communication terminals, allows communication of content data between first communication terminals, and does not allow transmission of content data from the first communication terminals to a second communication terminal but allows transmission of content data from the second communication terminal to the first communication terminals, wherein
the transfer manager allows, when second communication is established between a first communication terminal and a second communication terminal selection of which is received by the first communication terminal, communication of content data between the first communication terminal and the second communication terminal selection of which is received.
